# EUROPEAN PATENT APPLICATION

(11) **EP 3 441 537 A1**
(43) Date of publication of application: **13.02.2019**
(21) Application number: 18177383.9
(22) Date of filing: 30.07.2010
(51) Int. Cl.: E03D 11/14, F16L 33/22, F16L 33/08

(54) **IMPROVED TOILET PAN CONNECTOR**

(30) Priority: 31.07.2009 GB 0913380
(62) Divisional of application: 10742226.3
(71) Applicant: McAlpine & Co Limited, Hillington Industrial Estate Hillington, Glasgow G52 4LF (GB)
(72) Inventor: MCALPINE, James Edward, Glasgow, G52 4LF (GB)
(74) Representative: Gibbs, Richard

(57) **Abstract**

A kit for connecting a toilet pan waste outlet to a waste pipe is described. The kit comprises a connector, the connector including a sleeve portion adapted for connection to the outlet, wherein the sleeve portion is configured to form an axially extending contact surface with the outlet and a fastener, wherein the fastener is configured to apply a retaining force to the sleeve tending to retain the sleeve on the outlet.

## Description

### FIELD OF THE INVENTION

This invention relates to a connector for use in toilet waste flow systems.

### BACKGROUND TO THE INVENTION

Forming a good seal between a toilet pan and a waste pipe is crucial. If the seal fails then undesirable odours and even waste products can leak into the surrounding environment. The form, orientation and position of the toilet pan outlet along with the form, orientation and position of the waste pipe inlet may all impede the sealed connection between the toilet pan outlet and the waste pipe using rigid conduit. Consequently, flexible connectors are now in common use to connect toilet pans to waste pipes.

Flexible connectors commonly comprise one collar for connection to the toilet pan waste outlet, a flexible conduit and another collar for connection to the waste pipe inlet. To provide a seal between the connector and the pan outlet, the first collar is commonly provided with one or more flexible annular ribs extending inwards. The annular ribs are attached at their outer circumference at intervals along an inner surface of the first collar. The inner diameter of the ribs is less than an outer diameter of the toilet pan waste outlet. The flexible ribs deform when the connector is inserted over the toilet pan outlet, such that the ribs provide circumferential contact between the outlet and the connector, sealing the connection.

The collar for connection to the waste pipe inlet typically has a similar seal arrangement, however the flexible annular ribs extend outwards from the collar since the waste pipe collar is generally inserted into the waste pipe inlet.

Commonly the toilet pan outlet outer surface is cylindrical. However, the outer surface is often not perfectly cylindrical, for example toilet pan production processes often result in variations such as oval or partially oval waste outlets, or waste outlets with curved axis. These and other forms of misshapen toilet pan waste outlet can impede secure connection of the outlet to the connector.

Typically, application of the connector involves first one collar of the flexible connector being connected and the connector subsequently manipulated to enable the other collar to then be connected. Connection of the collars generally involves the collars being forced into inlets or over outlets. Connecting both collars of the connector generally requires movement in different directions, such that forcing the second collar into place may dislodge the first collar, jeopardising the integrity of the seal.

The collars are held in position by friction: between the collars and the inlet and outlet respectively. Since the levels of both friction and sealing are proportional to the normal force between the collars and inlet or outlet, there is a trade-off between ease of application of the collar and level of seal. Friction may be temporarily reduced during installation of the connector, for example using lubricants, or increased after installation, for example by heating the collar to cause it to shrink. Such methods may aid installation of individual collars slightly, however, by definition, they also impede any subsequent removal of the collar, for example in the event the connector or toilet pan requires replacement or to gain access to the waste pipe.

The form of the toilet pan and the location of the waste pipe connection may impede access to and/or vision of the waste pipe connection and/or the toilet pan connection. For example, back-to-wall toilet pans commonly involve awkward connections due to the proximity of a wall to the pan outlet and the obscuration of the outlet by the pan itself. Access to the waste pipe inlet may also be impeded, for example the inlet may be located behind an opening in a wall, or under a cistern. Commonly the connector will be first attached to the toilet pan waste outlet using predominantly tactile feedback. The flexible connector is subsequently manipulated to connect to the waste pipe, often predominantly using tactile feedback.

Typically the seal is tested by flushing the toilet to identify any leaks. With impaired views of the connections, it is not always possible to identify small leaks and/or connections that are not robust and liable to fail in due course.

To improve access to and/or vision of the waste pipe and toilet pan outlet during connection and/or maintenance, the toilet pan is sometimes connected to the waste pipe prior to locating the toilet pan in its position of use. The toilet pan is connected to the waste pipe via the flexible connector and subsequently moved to the toilet's final position of use.

Any movement of the connector, for example during movement of the toilet pan, may cause the seal between the toilet pan and the connector to become dislodged, jeopardising the integrity of the seal.

### SUMMARY OF THE INVENTION

According to a first aspect of the invention, there is provided a kit for connecting a toilet pan waste outlet to a waste pipe, the kit comprising
a connector, the connector including a sleeve portion adapted for connection to the outlet, wherein the sleeve portion is configured to form an axially extending contact surface with the outlet; and
a fastener, wherein the fastener is configured to apply a retaining force to the sleeve tending to retain the sleeve on the outlet.

In at least one embodiment, such a kit facilitates achieving and maintaining the secure connection of a toilet pan to a waste pipe inlet with a connector even when access to and/or vision of the connector is impaired. The fastener ensures that the toilet pan outlet connection remains secure even when the connector and/or the toilet pan are manipulated.

The fastener may be configured to adjust the retaining force.

The fastener may be configured to reduce the retaining force, for example to facilitate disconnection.

The fastener may be located on the connector prior to connection to the outlet. For example, the fastener may be placed around the sleeve of the connector, prior to connection to the outlet. Alternatively, the connector may first be connected to the outlet and the fastener subsequently applied.

The fastener may be selected from one or more of the following groups: tie wraps, hose clips, strapping, belts. Additionally, or alternatively, the fastener may comprise one or more hinged parts.

The fastener may be a distinct component or group of components separable from the connector. Alternatively, the fastener may be formed integral with the connector. For example, the fastener may comprise two or more flange surfaces adjustably separated.

The fastener may be configurable to have an inner diameter larger than the largest outer diameter of the flexible connector. This enables the fastener to be applied to or removed from the connector after the connector has been connected at one end, even when the fastener is for use in cooperation with the already connected end of the connector.

Additionally or alternatively, the fastener may be applied in a discontinuous state, such that the fastener may be applied to or removed from the connector subsequent to connection of the connector at one or both ends.

According to a further aspect of the invention, there is provided a connector for connecting a toilet pan waste outlet to a waste pipe, the connector comprising:
a waste pipe connection portion;
a conduit portion; and
a toilet pan waste outlet connection portion, the toilet pan waste outlet connection portion including a sleeve portion wherein the sleeve portion comprises a substantially prismatic internal surface configured to form a substantially prismatic contact surface with the outlet.

The sleeve portion may be of a flexible material, for example a synthetic rubber or a natural rubber.

In at least one embodiment, the sleeve portion is flexible such that the internal surface is deformable to adapt to an outer surface of the outlet. For example, the internal surface may deform from a cylindrical to an oval shape.

The conduit portion may be flexible, for example comprising corrugated ribs. Alternatively, the conduit portion may be rigid, for example a length of pipe.

The connector may further comprise a rigid annular portion, the rigid annular portion connecting the sleeve to the conduit portion.

The sleeve portion may be configured for receiving a fastener. For example, the sleeve may comprise one or more protrusions or indentations for locating the fastener. For example, ribs may restrict movement of the fastener parallel to the longitudinal axis of the sleeve. Additionally or alternatively, the ribs may provide guidance for ensuring the fastener is located with a central axis parallel to the longitudinal axis of the sleeve.

The sleeve portion may comprise a flared opening. The inner diameter of one end of the sleeve portion opening may be larger than the outer diameter of the toilet pan waste outlet such that the sleeve can be more easily located on the outlet.

The sleeve portion inner surface may be substantially cylindrical. Additionally, or alternatively the sleeve portion may comprise a tapered internal surface, for example a frustoconical surface. The tapered internal surface may facilitate progressively increasing contact between the sleeve portion and the waste outlet as the sleeve is moved along the outlet during installation.

The sleeve portion inner surface may be substantially smooth or may comprise gripping elements. For example, the inner surface may comprise annular ribs.

According to a further aspect of the present invention, there is provided a method for sealing a connector to a toilet pan waste outlet, the method comprising:
applying a sleeve of the connector over the outlet; and
increasing friction between the sleeve and the outlet to retain the connector on the outlet, wherein the friction is increased by applying a force to the connector.

The force may be applied substantially radially to the connector, or the force may be applied circumferentially.

The force may be adjustable.

The force may be applied permanently. Alternatively, the force may be applied temporarily.

The force may be applied using a fastener.

The method may include subsequently reducing the friction between the sleeve and the outlet.

The friction may be reduced by reducing the applied force.

Some aspects or embodiments of the present invention are set out in the numbered clauses below.
1. A kit for connecting a toilet pan waste outlet to a waste pipe, the kit comprising:
   a connector, the connector including a sleeve portion adapted for connection to the outlet, wherein the sleeve portion is configured to form an axially extending contact surface with the outlet; and
   a fastener, wherein the fastener is configured to apply a retaining force to the sleeve tending to retain the sleeve on the outlet.
2 The kit of clause 1, wherein the fastener is configured to adjust the retaining force.
3 The kit of clause 2, wherein the fastener is configured to reduce the retaining force.
4 The kit of any preceding clause, wherein the fastener is located on the connector prior to connection to the outlet.
5 The kit of clause 4, wherein the fastener is placed around the sleeve of the connector, prior to connection to the outlet.
6 The kit of any of clauses 1 to 3, wherein the connector is first connected to the outlet and the fastener subsequently applied.
7 The kit of any preceding clause, wherein the fastener is selected from one or more of the following groups: tie wraps, hose clips, strapping, belts.
8 The kit of any preceding clause, wherein the fastener comprises one or more hinged parts.
9 The kit of any preceding clause, wherein the fastener is a distinct component or group of components separable from the connector.
10 The kit of any of clauses 1 to 8, wherein the fastener is formed integral with the connector.
11 The kit of clause 10, wherein the fastener comprises two or more flange surfaces adjustably separated.
12 The kit of any preceding clause, wherein the fastener is configurable to have an inner diameter larger than the largest outer diameter of the flexible connector.
13 The kit of any preceding clause wherein the fastener is applied in a discontinuous state, such that the fastener is applied to or removed from the connector subsequent to connection of the connector at one or both ends.
14 A connector for connecting a toilet pan waste outlet to a waste pipe, the connector comprising:
   a waste pipe connection portion;
   a conduit portion; and
   a toilet pan waste outlet connection portion, the toilet pan waste outlet connection portion including a sleeve portion wherein the sleeve portion comprises a substantially prismatic internal surface configured to form a substantially prismatic contact surface with the outlet.
15 The connector of the 14, wherein the sleeve portion is of a flexible material, for example a synthetic rubber or a natural rubber.
16 The connector of either of clauses 14 of 15, wherein the sleeve portion is flexible such that the internal surface is deformable to adapt to an outer surface of the outlet.
17 The connector of any of clauses 14 to 16, wherein the internal surface deforms from a cylindrical to an oval shape.
18 The connector of any of clauses 14 to 17, wherein the conduit portion is flexible
19 The connector of any of clauses 14 to 18, wherein the conduit portion comprising corrugated ribs.
20 The connector of any of clauses 14 to 17, wherein the conduit portion is rigid.
21 The connector of any of clauses 14 to 20, wherein the connector further comprises a rigid annular portion, the rigid annular portion connecting the sleeve to the conduit portion.
22 The connector of any of clauses 14 to 21, wherein the sleeve portion is configured for receiving a fastener.
23 The connector of any of clauses 14 to 22, wherein the sleeve comprises one or more protrusions or indentations for locating the fastener.
24 The connector of clause 23, wherein the protrusions restrict movement of the fastener parallel to the longitudinal axis of the sleeve.
25 The connector of either of clauses 23 or 24, wherein the protrusions provide guidance for ensuring the fastener is located with a central axis parallel to the longitudinal axis of the sleeve.
26 The connector of any of clauses 14 to 25, wherein the sleeve portion comprises a flared opening.
27 The connector of clause 26, wherein the inner diameter of one end of the sleeve portion opening is larger than the outer diameter of the toilet pan waste outlet such that the sleeve can be more easily located on the outlet.
28 The connector of any of clauses 14 to 27, wherein the sleeve portion inner surface is substantially cylindrical.
29 The connector of any of clauses 14 to 28, wherein the sleeve portion comprises a tapered internal surface, for example a frustoconical surface.
30 The connector of clause 29, wherein the tapered internal surface facilitates progressively increasing contact between the sleeve portion and the waste outlet as the sleeve is moved along the outlet during installation.
31 The connector of any of clauses 14 to 30, wherein the sleeve portion inner surface is substantially smooth.
32 The connector of any of clauses 14 to 31, wherein the inner surface comprises gripping elements.
33 A method for sealing a connector to a toilet pan waste outlet, the method comprising:
   applying a sleeve of the connector over the outlet; and
   increasing friction between the sleeve and the outlet to retain the connector on the outlet, wherein the friction is increased by applying a force to the connector.
34 The method of clause 33, wherein the force is applied substantially radially to the connector.
35 The method of clause 33, wherein the force is applied circumferentially.
36 The method of any of clauses 33 to 35, wherein the force is adjustable.
37 The method of any of clauses 33 to 36, wherein the force is applied permanently.
38 The method of any of clauses 33 to 37, wherein the force is applied temporarily.
39 The method of any of clauses 33 to 38, wherein the force is applied using a fastener.
40 The method of any of clauses 33 to 39, wherein the method includes subsequently reducing the friction between the sleeve and the outlet.
41 The method of clause 40, wherein the friction is reduced by reducing the applied force.

### BRIEF DESCRIPTION OF THE DRAWINGS

Embodiments of the present invention will now be described with reference to the accompanying drawings in which:
Figure 1 is a perspective views of a toilet pan connector kit according to a first embodiment of the invention;
Figure 2 is a perspective view of the kit of Figure 1, with the connector of the kit in an extended state;
Figure 3 is a perspective view of the kit of Figure 1 with the connector of the kit in a flexed state;
Figure 4 is a perspective view of the kit of Figure 1 with the kit in use in combination with an exemplary toilet pan.
Figure 5 is a cross-sectional view of part of the connector of Figure 1, showing a sleeve portion.

### DETAILED DESCRIPTION OF THE DRAWINGS

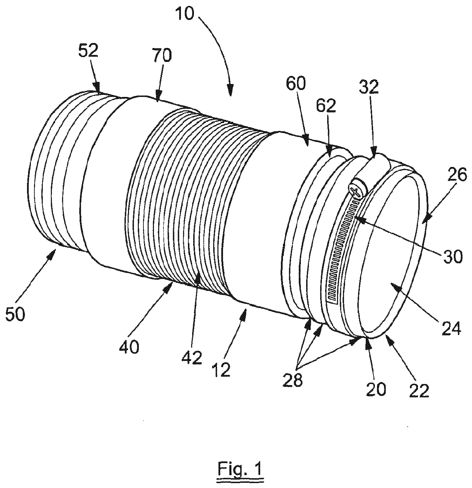

Reference is first made to Figures 1, 2 and 3 showing perspective views of a toilet pan waste connector kit, generally depicted by reference numeral 10 according to a first embodiment of the present invention. The connector kit 10 comprises a connector 12 and a fastener 30.

The connector 12 comprises a toilet pan waste outlet connection portion 20, a conduit portion 40 and a waste pipe connection portion 50. In the embodiment shown, the toilet outlet connection portion 20 is connected to the conduit portion 40 via a rigid annular portion 60 using a combination of an interference fit and a weld cap 62.

The waste pipe connection portion 50 is connected to the conduit portion 40 via a rigid annular portion 70.

The conduit portion is a flexible pipe of the type disclosed, for example, in US Patents 4,846,510 and 4,927,191, and UK Patent 2,298,470. The pipe is flexible, in that it may be flexed to create up to 180° bends, and may also be axially extended or contracted. The pipe wall is also configured such that deformation of the pipe tends to be retained.

The toilet pan waste outlet connection portion 20 comprises a flexible sleeve 22. The sleeve 22 has a substantially cylindrical internal surface 24. The cylindrical surface 24 comprises a flared portion 26, easing insertion over the toilet pan waste outlet.

The fastener 30 is located on the outer surface of the sleeve 22 with the aid of sleeve ribs 28, which help maintain a longitudinal position of the fastener 30 on the sleeve 22 and ensure that a plane defined by the circumference of the fastener 30 is perpendicular to the longitudinal axis of the sleeve 22.

In the embodiment shown, the fastener 30 is a worm drive hose clip, however it will be understood that the fastener 30 could equally be selected from the following exemplary groups: tie wraps, strapping, belts. The fastener 30 can be tightened or loosened using a screw 32. Tightening the screw 32 decreases the internal diameter of the fastener 30, causing the fastener 30 to circumferentially compress the sleeve 22. The sleeve 22 is made from a soft synthetic rubber such that the sleeve 22 deforms under compression from the fastener 30. The internal surface 24 of the sleeve 22 is radially pressed against the outer surface of the toilet pan waste outlet such that a cylindrical contact surface seals the connection of the waste outlet to the connector 12.

The waste pipe connection portion 50 comprises a flexible member 52. The flexible member 52 is made from a soft synthetic rubber and has a number of flexible annular ribs 54 projecting outwards. The ribs 54 have an inner diameter less than the waste pipe and an outer diameter greater than the waste pipe, such that the ribs 54 flex upon insertion of the portion 50 into the waste pipe, ensuring a seal between the connector 12 and the waste pipe.

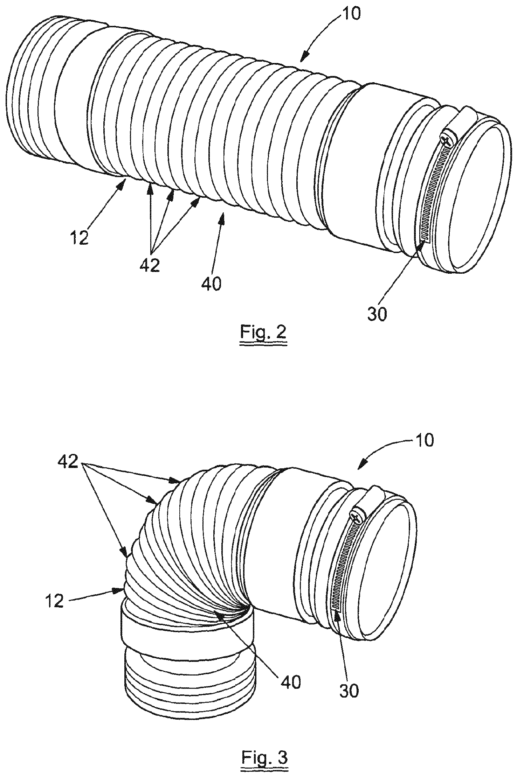

As can be seen from Figure 2, the flexible portion 40 of the connector 12 comprises a number of corrugated ribs 42. The corrugated ribs 42 allow the length of the connector 12 to be adjusted. As illustrated in Figure 3, the corrugated ribs 42 also allow the connector 12 to bend as well as extend and are configured such that the flexible portion will retain its form when configured by an operator. The connector 12 may be used to connect, for example, a horizontal toilet pan waste outlet to a vertical waste pipe.

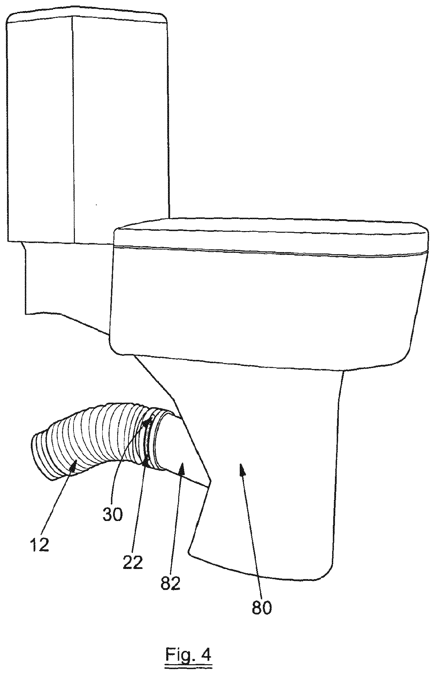

Figure 4 illustrates the kit 10 of figures 1, 2 and 3 connected to a toilet pan 80. The connector 12 is connected to the toilet pan waste outlet 82 by the sleeve 22. The sleeve 22 has been manipulated over the outlet 82 and secured in place by the fastener 30, forming a seal between the outlet 82 and the connector 12. Tightening of the fastener 30

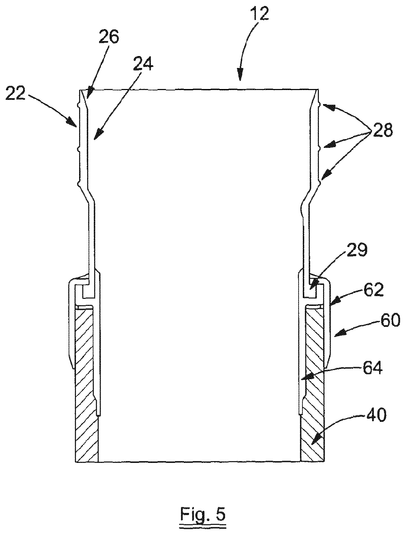

Figure 5 shows a cross section of a portion of the connector 12, including the sleeve 22 and part of the conduit portion 40. The sleeve ribs 28, the cylindrical surface 24 and a flared portion 26 of the sleeve are all shown. The flexible sleeve 22 has an annular disc 29 for attachment to the rigid annular portion 60. The rigid annular portion 60 comprises the weld cap 62 and an inner sleeve 64.

Various modifications may be made to the above-described embodiment without departing from the scope of the invention. For example, although the sleeve described has ribs for locating the fastener, this could be nodules or grooves or any other suitable geometry for locating the fastener. Similarly, although the conduit portion described is a flexible pipe with corrugated ribs, this could be another form of flexible pipe or a rigid pipe, for example.

## Claims

1. A kit (10) for connecting a toilet pan waste outlet (82) to a waste pipe, the kit comprising:
a connector (12), the connector including a sleeve portion (22) adapted for connection to the outlet (82), wherein the sleeve portion (22) is configured to form an axially extending contact surface with the outlet (82); and
a fastener (30), wherein the fastener (30) is configured to apply a retaining force to the sleeve tending to retain the sleeve on the outlet (82).

2. The kit of claim 1, wherein the connector (12) comprises a toilet pan waste outlet connection portion (20), a conduit portion (40) and a waste pipe connection portion (50), the toilet pan waste outlet connection portion (20) including the sleeve portion (22).

3. The kit of claim 1 or 2, wherein the conduit portion (40) is a flexible pipe and is also axially extendable or contractible.

4. The kit of claim 1, 2 or 3, wherein the fastener (30) is configured to apply an adjustable retaining force to the sleeve portion (22) tending to retain the sleeve portion (22) on the outlet (82).

5. The kit of any preceding claim, wherein the fastener (30) is locatable on an outer surface of the sleeve portion (22) with the aid of at least one of: sleeve ribs (28), protrusions, indentations, nodules and grooves for maintaining a longitudinal position of the fastener (30) on the sleeve portion (22), and optionally wherein the at least one of: sleeve ribs (28), protrusions, indentations, nodules and grooves are configured to restrict movement of the fastener (30) parallel to a longitudinal axis of the sleeve portion (22) and/or provide guidance for ensuring the fastener (30) is located with a central axis parallel to the longitudinal axis of the sleeve portion (22).

6. The kit of any preceding claim, wherein the fastener (30) is selected from one or more of the following groups: tie wraps, hose clips, strapping, belts.

7. The kit of any preceding claim, wherein the sleeve portion (22) comprises a flexible sleeve portion.

8. The kit of any preceding claim, wherein the fastener (30) is configured to circumferentially compress the sleeve portion (22), the sleeve portion (22) being flexible and/or comprising a flexible material such that the sleeve portion (22) deforms under compression from the fastener (30).

9. The kit of any preceding claim, wherein the sleeve portion (22) comprises a tapered internal surface for facilitating progressively increasing contact between the sleeve portion (22) and the waste outlet (82) as the sleeve portion (22) is moved along the outlet (82) during installation.

10. The kit of any preceding claim, wherein the toilet pan outlet connection portion (20) is connected to the conduit portion (40) via a rigid annular portion (60), optionally with a combination of an interference fit and a weld cap (62), and/or optionally wherein the sleeve portion (22) has an annular disc (29) for attachment to the rigid annular portion (60).

11. The kit of any preceding claim, wherein the sleeve portion (22) inner surface comprises gripping elements such as annular ribs.

12. The kit of any preceding claim, wherein a pipe wall of the flexible pipe is configured such that deformation of the flexible pipe tends to be retained.

13. The kit of any preceding claim, wherein the waste pipe connection portion (50) is connected to the conduit portion (40) via a rigid annular portion (70).

14. The kit of any preceding claim, wherein the waste pipe connection portion (50) comprises a flexible member (52) made from a soft synthetic rubber and having a number of flexible annular ribs (54) projecting outwards, the ribs (54) having an inner diameter less than the waste pipe and an outer diameter greater than the waste pipe, such that the ribs (54) flex upon insertion of the waste pipe connection portion (50) into the waste pipe, ensuring a seal between the flexible toilet pan waste outlet connector (12) and the waste pipe.

15. A method for sealing a connector (12) to a toilet pan waste outlet (82), the method comprising:
applying a sleeve (22) of the connector (12) over the outlet (82); and
increasing friction between the sleeve (22) and the outlet (82) to retain the connector on the outlet, wherein the friction is increased by applying a force to the connector (12).
